# EUROPÄISCHE PATENTSCHRIFT

(11) **EP 3 579 681 B1**
(45) Veröffentlichungstag und Bekanntmachung des Hinweises auf die Patenterteilung: **23.03.2022**
(21) Anmeldenummer: 17751017.9
(22) Anmeldetag: 09.08.2017
(51) Int. Cl.: A01D 34/416

(54) **MÄHFADENSPULE FÜR EINE MOTORSENSE, SOWIE MIT EINER SOLCHEN MÄHFADENSPULE AUSGESTATTETER ODER ALS SOLCHE MÄHFADENSPULE AUSGEBILDETER SCHNEIDKOPF DER MOTORSENSE**
STRING REEL FOR A STRING TRIMMER, AND STRING TRIMMER CUTTING HEAD EQUIPPED WITH SUCH A STRING REEL OR IN THE FORM OF SUCH A STRING REEL
BOBINE DE FIL DE FAUCHAGE DESTINÉE À UNE FAUX À MOTEUR, ET TÊTE DE COUPE DE LA FAUX À MOTEUR ÉQUIPÉE D'UNE TELLE BOBINE DE FIL DE FAUCHAGE OU CONÇUE SOUS FORME D'UNE TELLE BOBINE DE FIL DE FAUCHAGE

(30) Priorität: 27.02.2017 DE 202017001013 U
(43) Veröffentlichungstag der Anmeldung: 18.12.2019
(73) Patentinhaber: Scheppach GmbH, 89335 Ichenhausen (DE)
(72) Erfinder: BINDHAMMER, Markus, 86316 Friedberg (DE)
(74) Vertreter: Patentanwälte Munk
(86) Internationale Anmeldenummer: PCT/EP2017/025229
(87) Internationale Veröffentlichungsnummer: WO 2018/153424

(56) Entgegenhaltungen:
- EP-A1- 0 876 750
- DE-A1- 3 029 056
- US-A1- 2007 028 459

## Beschreibung

Die Erfindung betrifft eine Mähfadenspule zur im Mähbetrieb bewegbaren Anbringung an einem Schneidkopf einer Motorsense gemäß dem Oberbegriff des Anspruchs 1, ferner einen mit einer solchen Mähfadenspule ausgerüsteten Schneidkopf der Motorsense und einen insgesamt als derartigen Mähfadenspule ausgebildeten Schneidkopf der Motorsense.

Motorsensen der gattungsgemäßen Art werden zum Beschnitt von schlecht erreichbaren Rasenstücken, aber auch Unterholz und dergleichen eingesetzt, wobei leistungsstarke, benzinbetriebene Motorsensen und im leistungsmäßig etwas darunter angesiedelten Segment Elektrosensen, Rasentrimmer und Freischneider unter den Oberbegriff Motorsense fallen.

Derartige Motorsensen werden üblicherweise mit Mähfadenspulen am Schneidkopf ausgerüstet, wobei das Schneidwerkzeug durch einen Faden ausgebildet ist, der auf eine Spule aufgewickelt ist und bei per Motor drehbewegter Spule an seinen aus der Spule herausragenden, freien Enden durch die Fliehkraft nach radial außen gezogen wird. Derartige Mähfaden bestehen in der Regel aus Kunststoff und verschleißen im Mähbetrieb relativ schnell, weshalb auf den Nähfadenspulen der gattungsgemäßen Art deutlich mehr Faden aufgenommen ist, als von der Fadenspule als Schneidwerkzeug absteht. Ist das als Schneidwerkzeug dienende Fadenstück verschlissen, wird einfach ein weiteres Fadenstück nachgezogen, welches dann als neues Schneidwerkzeug dient, bis es ebenfalls verschlissen ist und das nächste Fadenstück nachgezogen wird und so weiter. Derartige Mähfadenspulen weisen zumeist zwei Fadenstränge auf, deren beiden freien Enden um 180° versetzt aus dem Schneidkopfgehäuse geführt sind. Die Länge des Mähfadens kann dabei beispielsweise zwischen zwei und vier Meter betragen.

Es gibt dabei Motorsensen-Schneidköpfe, die ein mehrteiliges Gehäuse aufweisen, in dem eine als Verschleißteil austauschbare Mähfadenspule aufgenommen ist. Ist der Mähfaden zu Ende, so öffnet man das Gehäuse und entnimmt die alte Mähfadenspule und ersetzt sie durch eine neue. Andere Schneidköpfe sind insgesamt als Mähfadenspule ausgebildet und stellen insgesamt das Verschleißteil dar.

Ein gängiges Problem dabei ist es, dass nicht ohne Weiteres feststellbar ist, welche Mähfadenlänge noch vorhanden ist. Bei einem mehrteiligen Gehäuse, in dem die Spule aufgenommen ist, muss zuerst das Gehäuse zerlegt werden, um dann an die Spule zu gelangen und dann zu schauen, wie viel Faden noch da ist. Bei einem nicht zerlegbaren, insgesamt als Mähfadenspule ausgebildeten Schneidkopf gelingt das gar nicht. Oft hat man aber bei Trimm- oder Freischneidearbeiten oder dergleichen keine Ersatzfadenspule zur Hand, so dass die Arbeiten unterbrochen und eine neue Mähfadenspule nachbestellt oder gekauft werden muss, bevor weitergearbeitet werden kann.

Gemäß der europäischen Patentschrift EP 0 876 750 A1 bzw. der deutschen Patentanmeldung DE 197 19 489 A1 wird eine Mähfadenspule zur drehbaren Anbringung an einem Schneidkopf einer Motorsense vorgeschlagen, die eine Spule aufweist, auf die zwei Mähfadenstränge aufgewickelt sind, deren freien Fadenenden im Mähbetrieb per Fliehkraft nach außen gezogen werden, wobei nach Abnutzung der Fadenstücke an den freien Fadenenden die Mähfadenstränge nachgezogen werden können, um wieder eine zum Mähen nötige Länge der Fadenstücke bereitzustellen. Dabei kann eine Reserve-Fadenlänge anders eingefärbt sein als der übrige Mähfaden, um eine visuelle Anzeige bereitzustellen, die anzeigt, dass nur noch eine gewisse Restfadenlänge bereitsteht.

Hiervon ausgehend ist es Aufgabe der vorliegenden Erfindung, bei einer derartigen Mähfadenspule bzw. an Schneidköpfen von Motorsensen die Anzeige, dass nur noch eine gewisse Restfadenlänge bereitsteht, zu verbessern.

Diese Aufgabe wird hinsichtlich der Mähfadenspule mit den Merkmalen des Anspruchs 1 gelöst, hinsichtlich des Schneidkopfs mit den Merkmalen des Anspruchs 10 oder 11.

Erfindungsgemäß wird eine Mähfadenspule zur im Mähbetrieb drehbewegbaren Anbringung an einem Schneidkopf einer Motorsense, insbesondere eines Rasentrimmers oder eines Freischneiders vorgeschlagen, wobei die Mähfadenspule als austauschbares Verschleißteil ausgebildet ist. Drehbewegbare Anbringung an einem Schneidkopf an einer Motorsense, wobei die Mähfadenspule als austauschbares Verschleißteil ausgebildet ist, bedeutet in diesem Zusammenhang, dass die Mähfadenspule an einem Rahmen, Gehäuse oder dergleichen des Schneidkopfs anbringbar sein kann und mit diesem zusammen den Schneidkopf bildet oder dass die Mähfadenspule insgesamt, beispielsweise einstückig mit dem entsprechenden Gehäuse den Schneidkopf bildet. Auf die Mähfadenspule ist dabei eine Anzahl, bevorzugt zwei Mähfadenstränge, aufgewickelt, so dass jedes freie Fadenende im Mähbetrieb per Fliehkraft nach radial außen gezogen wird und dass durch die Drehbewegung im Mähbetrieb gestraffte, nahe des jeweiligen Fadenendes liegende Fadenstück Pflanzenhalme abschlagen kann, wobei jeder Mähfadenstrang eine größere Länge aufweist als das jeweilige, im Mähbetrieb gestraffte Fadenstück am Fadenende, so dass jeder Mähfadenstrang nach Verschleiß des Fadenstücks am Fadenende zur Verlängerung einer mit der Mähfadenspule erzielbaren Mähdauer nachziehbar ist.

Bei der erfindungsgemäßen Mähfadenspule hat ferner zumindest einer, vorzugsweise jeder der Anzahl Mähfadenstränge in einem sich ausgehend vom freien Ende des jeweiligen Mähfadenstrangs erstreckenden Normalverbrauchsabschnitt ein anderes Aussehen als in einem erst danach nachziehbaren, näher am Anknüpfungspunkt an die Mähfadenspule gelegenen Reserveabschnitt. Zwischen dem Reserveabschnitt und dem Normalverbrauchsabschnitt ist erfindungsgemäß noch ein weiterer, als Vorwarnung, dass nun bald der Reserveabschnitt erreicht ist, dienender Warnabschnitt vorgesehen, in dem der Mähfadenstrang wiederum ein anderes Aussehen aufweist als in seinem Reserveabschnitt und Normalverbrauchsabschnitt. Dadurch erhält der Benutzer einen Hinweis, wenn sich das Ende der Gebrauchsdauer der Mähfadenspule nähert und kann dann Nachschub besorgen, bevor die Mähfadenspule ausgetauscht werden muss. Lästige Stillstandszeiten können dann entfallen.

Dabei gelingt eine Variation des Aussehens, also der vom Benutzer wahrnehmbaren Optik des Mähfadenstrangs erfindungsgemäß besonders einfach durch eine farbliche Markierung, wenn also die Abschnitte des jeweiligen Mähfadenstrangs farblich variieren und entsprechend eingefärbt sind.

Vorteilhafte Weiterbildungen sind Gegenstand der Unteransprüche. So kann sich der Reserveabschnitt ausgehend vom Anknüpfungspunkt an die Mähfadenspule in Richtung zum freien Ende hin erstrecken, mit anderen Worten, sich ganz am anknüpfungspunktseitigen Ende des jeweiligen Mähfadenstrangs befinden.

Der Reserveabschnitt des Mähfadens weist vorzugsweise eine Warnfarbe auf, insbesondere rot. Weiterhin bevorzugt ist die Färbung dabei so intensiv, dass sie auch im Betrieb der Motorsense wahrgenommen werden kann. Weiterhin ist auch der Normalverbrauchsabschnitt eingefärbt, und zwar vorteilhaft in einer sich stark von der Einfärbung im Reserveabschnitt abhebenden Farbe, insbesondere grün, welches sich auf der anderen Seite des Farbenkreises wie rot befindet, so dass ein Erreichen des Reserveabschnitts aufgrund des starken Kontrastes deutlich wahrnehmbar ist. Der Warnabschnitt kann dabei in einer Zwischenfarbe eingefärbt sein, zum Beispiel gelb oder orange, so dass sich eine Art "Ampel" ergibt.

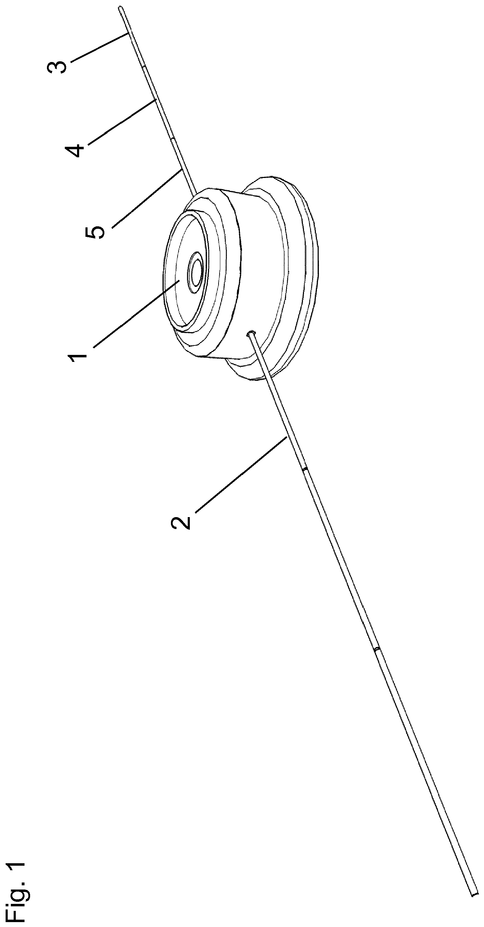

Nachfolgend wird ein Ausführungsbeispiel der Erfindung anhand der beigefügten Zeichnung näher erläutert. Diese zeigt eine perspektivische Ansicht eine in einem Schneidkopfgehäuse aufgenommenen Mähfadenspule 1 bei zur Veranschaulichung der Erfindung vollständig abgewickelten, um 180° versetzt zueinander durch eine Fadenöffnung in einer umfangsseitigen Wand des Schneidkopfgehäuses geführten Mähfadensträngen 2. Die Mähfadenstränge 2 weisen dabei jeweils einen rot eingefärbten Reserveabschnitt 5, einen orange eingefärbten Warnabschnitt 4 und einen grün eingefärbten Normalverbrauchsabschnitt 3 auf.

Wenn im Mähbetrieb nach einiger Zeit bei Nachziehen der Mähfadenstränge 2 der rot eingefärbte Reserveabschnitt 5 erreicht wird, signalisiert das, dass alsbald eine Ersatzfadenspule besorgt werden sollte, so dass das Ende des Mähfadens nicht während des laufenden Mähbetriebs erreicht wird und keine lästige Stillstandszeit auftritt. Das Erreichen des dem Reservewarnabschnitt 5 vorgeschalteten, orange eingefärbten Warnabschnitts 4 gibt schon vor Erreichen des eigentlichen Reserveabschnitts 5 eine entsprechende Vorwarnung.

Beispielsweise können die beiden Mähfadenstränge 2 auf dem ersten, den Normalverbrauchsabschnitt 3 bildenden Meter grün eingefärbt sein, auf dem den Warnabschnitt 4 bildenden, zweiten Meter orange und auf dem letzten, den Reserveabschnitt 5 bildenden Meter rot.

Abwandlungen und Modifikationen der gezeigten Ausführungsform sind möglich, ohne den Rahmen der Erfindung zu verlassen.

## Patentansprüche

1. Mähfadenspule (1), zur im Mähbetrieb drehbewegbaren Anbringung an einem Schneidkopf einer Motorsense, insbesondere eines Rasentrimmers oder eines Freischneiders, wobei die Mähfadenspule (1) als von der Motorsense unabhängig austauschbares Verschleißteil ausgebildet ist, auf die eine Anzahl, beispielsweise zwei Mähfadenstränge (2) aufgewickelt ist, so dass jedes freie Fadenende im Mähbetrieb per Fliehkraft nach radial außen gezogen wird und das durch die Drehbewegung im Mähbetrieb gestraffte, am freien Fadenende liegende Fadenstück Pflanzenhalme abschlagen kann, wobei die Mähfadenstränge (2) eine größere Länge aufweisen als das jeweilige, im Mähbetrieb gestraffte Fadenstück am freien Fadenende, so dass die Anzahl Mähfadenstränge (2) nach Verschleiß des Fadenstücks am freien Fadenende nachziehbar ist, wobei zumindest einer, vorzugsweise jeder der Anzahl Mähfadenstränge (2) in einem sich ausgehend vom freien Ende des jeweiligen Mähfadenstrangs erstreckenden Normalverbrauchsabschnitt (3) ein anderes Aussehen hat als in einem erst danach nachziehbaren, näher am Anknüpfungspunkt an die Mähfadenspule (1) gelegenen Reserveabschnitt (5), nämlich in seinem Reserveabschnitt (5) gegenüber seinem Normalverbrauchsabschnitt (3) farblich variiert, und wobei der zumindest eine, vorzugsweise jeder der Anzahl Mähfadenstränge (2) in seinem Reserveabschnitt (5) und/oder seinem Normalverbrauchsabschnitt (3) eingefärbt ist,
**dadurch gekennzeichnet, dass**
der zumindest eine, vorzugsweise jeder der Anzahl Mähfadenstränge (2) in einem zwischen seinem Normalverbrauchsabschnitt (3) und seinem Reserveabschnitt (5) gelegenen Warnabschnitt (4) ein anderes Aussehen hat als in seinem Normalverbrauchsabschnitt (3) und seinem Reserveabschnitt (5), nämlich gegenüber seinem Reserveabschnitt (5) und damit seinem Normalverbrauchsabschnitt (3) farblich variiert und eingefärbt ist.

2. Mähfadenspule (1) nach Anspruch 1, **dadurch gekennzeichnet, dass** sich der Reserveabschnitt (5) ausgehend vom Anknüpfungspunkt an die Mähfadenspule (1) in Richtung zum freien Fadenende hin erstreckt.

3. Mähfadenspule (1) nach Anspruch 1 oder 2, **dadurch gekennzeichnet, dass** der Reserveabschnitt (5) des zumindest einen, vorzugsweise von jedem der Anzahl Mähfadenstränge (2) rot ist.

4. Mähfadenspule (1) nach Anspruch 1, 2 oder 3, **dadurch gekennzeichnet, dass** der Normalverbrauchsabschnitt (3) des zumindest einen, vorzugsweise von jedem der Anzahl Mähfadenstränge (2) grün ist.

5. Mähfadenspule (1) nach einem der vorhergehenden Ansprüche, **dadurch gekennzeichnet, dass** der Warnabschnitt (4) des zumindest einen, vorzugsweise von jedem der Anzahl Mähfadenstränge (2) gelb oder orange ist.

6. Mähfadenspule (1) nach einem der vorhergehenden Ansprüche, **dadurch gekennzeichnet, dass** sie zur Unterbringung in einem Schneidkopfgehäuse einer Motorsense, insbesondere eines Rasentrimmers oder eines Freischneiders geeignet ist.

7. Mähfadenspule (1) nach einem der vorhergehenden Ansprüche, **dadurch gekennzeichnet, dass** die Länge des Reserveabschnitts (5) kleiner oder gleich der Länge des Normalverbrauchsabschnitt (3) ist und vorzugsweise zwischen 50 und 100 cm beträgt.

8. Mähfadenspule (1) nach einem der vorhergehenden Ansprüche, **dadurch gekennzeichnet, dass** die Länge des Warnabschnitts (4) kleiner oder gleich der Länge des Normalverbrauchsabschnitt (3) ist und vorzugsweise zwischen 50 und 100 cm beträgt.

9. Mähfadenspule (1) nach einem der vorhergehenden Ansprüche, **dadurch gekennzeichnet, dass** jeder der Anzahl Mähfadenstränge (2) zwischen 250 und 400 cm lang ist, vorzugsweise 300 cm lang.

10. Schneidkopf für eine Motorsense, insbesondere einen Rasentrimmer oder Freischneider, mit einem Gehäuse, und einer darin enthaltenen Mähfadenspule (1), wobei das Gehäuse mehrteilig ist, so dass die Mähfadenspule (1) zum Austausch zugänglich ist, und wobei das Gehäuse in seiner umfangsseitigen Wand zumindest eine Fadenöffnung aufweist, durch die jeweils ein Mähfadenstrang (2) geführt ist, **dadurch gekennzeichnet, dass** die Mähfadenspule nach einem der vorhergehenden Ansprüche ausgebildet ist.

11. Schneidkopf für eine Motorsense, insbesondere einen Rasentrimmer oder Freischneider, insgesamt ausgebildet als austauschbare Mähfadenspule, **dadurch gekennzeichnet, dass** der Schneidkopf als Mähfadenspule nach einem der vorhergehenden Ansprüche 1 - 9 ausgebildet ist.

## Claims

1. A string reel (1) for being mounted on a cutting head of a string trimmer, in particular a lawn trimmer or a brush cutter, in a rotatable manner in mowing operation, wherein the string reel (1) is constructed as an exchangeable wearing part, onto which a number of mowing string strands (2) is wound up, for example two mowing string strands (2), so that in mowing operation each free thread end is pulled radially outwards by centrifugal force and the piece of thread pulled outwards by the rotary movement in mowing operation and located at the free thread end can knock off plant stalks, wherein the mowing string strands (2) have a greater length than the respective thread piece pulled outwards in mowing operation at the free thread end, so that the number of mowing string strands (2) can be pulled out at the free thread end after wear of the thread piece, wherein at least one, preferably each of the number of mowing string strands (2) has a different appearance in a normal consumption section (3) extending starting from the free end of the respective mowing string strand than in a reserve section (5) which can only subsequently be pulled out and is located closer to the connection point to the string reel (1), namely in its reserve section (5) varies in colour relative to its normal consumption section (3), and wherein the at least one, preferably each of the number of mowing string strands (2) is coloured in its reserve section (5) and/or its normal consumption section (3),
**characterized in that**
the at least one, preferably each of the number of mowing string strands (2) in a warning section (4) situated between its normal consumption section (3) and its reserve section (5) has a different appearance than in its normal consumption section (3) and in its reserve section (5), namely varies in colour relative to its reserve section (5) and therewith relative to its normal consumption section (3) and is coloured.

2. A string reel (1) according to claim 1, **characterized in that** the reserve section (5) extends in the direction of the free thread end starting from the connecting point to the string reel (1).

3. A string reel (1) according to one of the preceding claims, **characterized in that** the reserve portion (5) of at least one, preferably of each of the number of mower thread strands (2) is red.

4. A string reel (1) according to one of the preceding claims 2 to 6, **characterized in that** the normal consumption portion (3) of at least one, preferably of each of the number of mowing string strands (2) is green.

5. A string reel (1) according to one of the preceding claims, **characterized in that** the warning portion (4) of at least one, preferably of each of the number of mower thread strands (2) is yellow or orange.

6. A string reel (1) according to one of the preceding claims, **characterized in that** it is adapted for being accommodated in a cutting head housing of a string trimmer, in particular a lawn trimmer or a brush cutter.

7. A string reel (1) according to one of the preceding claims, **characterized in that** the length of the reserve section (5) is less than or equal to the length of the normal consumption section (3) and is preferably between 50 and 100 cm.

8. A string reel (1) according to one of the preceding claims, **characterized in that** the length of the warning section (4) is less than or equal to the length of the normal consumption section (3) and is preferably between 50 and 100 cm.

9. A string reel (1) according to one of the preceding claims, **characterized in that** each of the number of mowing string strands (2) is between 250 and 400 cm long, preferably 300 cm long.

10. A cutting head for a string trimmer, in particular a lawn trimmer or brush cutter, having a housing and a string reel (1) contained therein, the housing being in several parts so that the string reel (1) is accessible for replacement, and the housing having in its peripheral wall at least one thread opening through which a respective mowing string strand (2) is guided, **characterized in that** the string reel is formed according to one of the preceding claims.

11. A cutting head for a string trimmer, in particular a lawn trimmer or brush cutter, designed as a whole as an exchangeable string reel, **characterized in that** the cutting head is designed as a string reel according to one of the preceding claims 1 to 9.

## Revendications

1. Bobine de fil de fauchage (1) destinée à être montée de manière rotative, en fonctionnement de fauchage, sur une tête de coupe d'une faux à moteur, en particulier d'un coupe-bordures ou d'un coupe-broussailles, dans laquelle la bobine de fil de fauchage (1) est conçue sous forme d'une pièce d'usure échangeable de manière indépendante de la faux à moteur, sur laquelle est enroulé un nombre de brins de fil de fauchage (2), par exemple deux, de sorte que chaque extrémité de fil libre est tirée radialement vers l'extérieur par force centrifuge lors du fonctionnement de fauchage, et que la pièce de fil située au niveau de l'extrémité de fil libre et tendue par le mouvement rotatif lors du fonctionnement de fauchage, peut couper des tiges de plante, dans laquelle les brins de fil de fauchage (2) présentent une longueur supérieure à celle de la pièce de fil respective située au niveau de l'extrémité de fil libre et tendue lors du fonctionnement de fauchage, de sorte que le nombre de brins de fil de fauchage (2) peut être tirées au niveau de l'extrémité de fil libre après l'usure de la pièce de fil, dans laquelle au moins l'un, de préférence chacun du nombre des brins de fil de fauchage (2) présente dans une section de consommation normale (3) s'étendant à partir de l'extrémité libre du brin de fil de fauchage respectif un autre aspect que dans une section de réserve (5) qui est située plus près du point de raccordement à la bobine de fil de fauchage (1) et qui ne peut être tirée qu'après, à savoir varie en termes de couleur dans sa section de réserve (5) par rapport à sa section de consommation normale (3), et dans laquelle ledit au moins un, de préférence chacun du nombre des brins de fil de fauchage (2) est teint dans sa section de réserve (5) et/ou dans sa section de consommation normale (3),
**caractérisée par le fait que**
ledit au moins un, de préférence chacun du nombre des brins de fil de fauchage (2) présente dans une section d'avertissement (4) située entre sa section de consommation normale (3) et sa section de réserve (5) un autre aspect que dans sa section de consommation normale (3) et sa section de réserve (5), à savoir varie en termes de couleur et est teint par rapport à sa section de réserve (5) et donc sa section de consommation normale (3).

2. Bobine de fil de fauchage (1) selon la revendication 1, **caractérisée par le fait que** la section de réserve (5) s'étend, à partir du point de raccordement à la bobine de fil de fauchage (1), en direction de l'extrémité de fil libre.

3. Bobine de fil de fauchage (1) selon la revendication 1, **caractérisée par le fait que** la section de réserve (5) dudit au moins un, de préférence de chacun du nombre des brins de fil de fauchage (2) est rouge.

4. Bobine de fil de fauchage (1) selon la revendication 1, 2 ou 3, **caractérisée par le fait que** la section de consommation normale (3) dudit au moins un, de préférence de chacun du nombre des brins de fil de fauchage (2) est verte.

5. Bobine de fil de fauchage (1) selon l'une quelconque des revendications précédentes, **caractérisée par le fait que** la section d'avertissement (4) dudit au moins un, de préférence de chacun du nombre des brins de fil de fauchage (2) est jaune ou orange.

6. Bobine de fil de fauchage (1) selon l'une quelconque des revendications précédentes, **caractérisée par le fait qu'**elle est apte à être logée dans un boîtier de tête de coupe d'une faux à moteur, en particulier d'un coupe-bordures ou d'un coupe-broussailles.

7. Bobine de fil de fauchage (1) selon l'une quelconque des revendications précédentes, **caractérisée par le fait que** la longueur de la section de réserve (5) est inférieure ou égale à la longueur de la section de consommation normale (3) et est de préférence comprise entre 50 et 100 cm.

8. Bobine de fil de fauchage (1) selon l'une quelconque des revendications précédentes, **caractérisée par le fait que** la longueur de la section d'avertissement (4) est inférieure ou égale à la longueur de la section de consommation normale (3) et est de préférence comprise entre 50 et 100 cm.

9. Bobine de fil de fauchage (1) selon l'une quelconque des revendications précédentes, **caractérisée par le fait que** chacun du nombre des brins de fil de fauchage (2) présente une longueur comprise entre 250 et 400 cm, de préférence de 300 cm.

10. Tête de coupe pour une faux à moteur, en particulier un coupe-bordures ou un coupe-broussailles, comprenant un boîtier et une bobine de fil de fauchage (1) logée dans celui-ci, dans laquelle le boîtier est en plusieurs parties de sorte que la bobine de fil de fauchage (1) est accessible pour être échangée, et dans laquelle le boîtier présente dans sa paroi périphérique au moins une ouverture de fil à travers laquelle est guidé respectivement un brin de fil de fauchage (2), **caractérisée par le fait que** la bobine de fil de fauchage est conçue selon l'une quelconque des revendications précédentes.

11. Tête de coupe pour une faux à moteur, en particulier un coupe-bordures ou un coupe-broussailles, conçue dans l'ensemble en tant que bobine de fil de fauchage échangeable, **caractérisée par le fait que** la tête de coupe est conçue en tant que bobine de fil de fauchage selon l'une quelconque des revendications précédentes 1 à 9.
